# EUROPEAN PATENT SPECIFICATION

(11) **EP 0 608 685 B1**
(45) Date of publication and mention of the grant of the patent: **08.07.1998**
(21) Application number: 94100155.4
(22) Date of filing: 07.01.1994
(51) Int. Cl.: H04N 1/387

(54) **Production of signatures wherein original image information is manipulated to fit on receiver sheets**
Erzeugung von Signaturen in welchen Originalbilddaten so manipuliert werden, das sie auf Druckpapierbögen passen
Production des signatures où l'information d'image originale est manipulée pour s'adapter aux feuilles du récepteur

(30) Priority: 28.01.1993 US 10240
(43) Date of publication of application: 03.08.1994
(73) Proprietor: EASTMAN KODAK COMPANY, Rochester, New York 14650-2201 (US)
(72) Inventor: Alesio, Philip, c/o EASTMAN KODAK COMPANY, Rochester, New York 14650-2201 (US); Matias, Luis A., c/o EASTMAN KODAK COMPANY, Rochester, New York 14650-2201 (US)
(74) Representative: Blickle, K. Werner, Dipl.-Ing.

(56) References cited:
- EP-A- 0 429 049
- EP-A- 0 477 569
- WO-A-91/08639
- US-A- 5 051 843
- US-A- 5 119 206

## Description

### Technical Field

This invention relates generally to electronic image reproduction apparatus for producing signatures wherein original image information is manipulated to fit on receiver sheets.

### Background Art

A signature is a sheet containing plural printed pages arranged such that when a plurality of signatures are folded and nested in a set, one inside the other, they become one collated pamphlet. US-A-5,105,283 discloses commercially available reproduction apparatus for producing signatures from electronic signals representative of images of a plurality of originals. The reproduction apparatus includes a multi-image electronic memory having addressable regions for storing the images in a first sequence. The stored images are selectively retrieved from the memory in an order different from the first sequence such that reproduced images of the originals are located on respective sides of receiver sheets in regions so that multiple stacked signatures can be folded between images and nested to form a collated pamphlet with the pages properly sequenced.

It is known with electronic image reproduction apparatus to provide for scaling original image information so that the reproduced information fits precisely on a receiver sheet. See, for example, US-A-5,053,885. However, there is no known suggestion for scaling original image information so that multiple reproduced images will properly fit on a receiver sheet to form a signature. For example, if original image information is in an 8.5" x 11.0" (215,9 mm x 279,4 mm) format the operator is forced to create signatures on 11.0" x 17.0" (279,4 mm x 431,8 mm) receiver sheets. Previously known electroniic image reproduction apparatus do not allow multiple 8.5" X 11.0" original images to be reproduced on an 8.5" x 11.0" receiver sheet to form a signature. This problem is exacerbated if the original information needs to be scaled by one factor in a first dimension and by a second factor in a second dimension. This situation would occur if 8.5" X 11.0" formatted original information were being reproduced on A4 size receiver sheets to form signatures, or vice versa.

US-A-5,051,843 discloses a digital copier for reducing images printed on a plurality of documents and reproducing the reduced images on a single paper sheet in a desired arrangement. An image forming timing of a scanner and a paper transporting timing of a register roller pair are set up constantly with accuracy by determining a period of time needed for a scanner to move from its original position or home position to a predetermined position and, on the basis of the determined period of time, automatically correcting a variation in the next image forming timing which is ascribable to a change of magnification, for example. The calculation of the scaling parameters (magnification of the images to be printed) is determined by the number of individual pictures arranged anlong the lateral and the longitudinal dimension of the paper sheet. No automatic determination of the dimension of the original image or the scaling factors is carried out.

The European Patent Application EP-A-0 477 469 describes an automatic signature printing process for an electronic printing system having a source of signature sheets and a programmer to program the system to print jobs including signatures. An input scanner is used for scanning and converting the documents to electronic images. A controller reorders the electronic images in order to print two electronic images separated by a gutter on each side of the signature sheets. The controller determines from the number of originals and the number of electronic images on each signature the total number of signatures to be printed. There is no automatic production of signatures and the operator has to provide the system with the settings for the page margins.

A further problem with previously known signature production apparatus is that there is no provision for accommodating orientations of original images and receiver sheets which do not match up. For example, if 8.5" X 11.0" originals and 11.0" X 17.0" receiver sheets are both oriented in a landscape position, pamphlets cannot be made with previously known apparatus. As a result, such electronic image reproduction apparatus are limited in their capability to reproduce original image information on any size and oriented receiver sheet in order to form signatures which are used to make pamphlets.

### Summary of the Invention

It is an object of the present invention to provide electronic image reproduction apparatus which will manipulate electronic image signals, in that scaling factors are calculated automatically for the original image, to create signatures.

The above object is accomplished by an apparatus as claimed in claim 1.

The preferred embodiments of the present invention provide the advantage of allowing an operator to create signatures without concern as to the format size or orientation of the original image information, or the size or orientation of the receiver sheets. A further advantage is that the original image information can be scaled by one factor in a first dimension and by a second factor in a second dimension. This allows the original image information to be properly fit on the receiver sheet when forming the signature.

### Brief Description of the Drawings

In the detailed description of the preferred embodiments of the invention presented below, reference is made to the accompanying drawings, in which:
- Fig. 1: is a perspective view of reproduction apparatus according to the present invention;
- Fig. 2: is a schematic block diagram of reproduction apparatus of Fig. 1;
- Fig. 3: is a schematic diagram of a multi-color electrostatographic reproduction apparatus;
- Fig. 4: is a perspective illustration of a 12 page pamphlet;
- Fig. 5: is an exploded top view of the pamphlet shown in Fig. 4;
- Fig. 6: is an exploded top view of a pamphlet similar to that of Figures 4 and 5, but produced in chapters;
- Fig. 7: is a logic chart for scaling original information to fit on receiver sheets;
- Fig. 8: shows an original image and a receiver sheet;
- Fig. 9: shows an original image and a receiver sheet.
- Fig. 10: shows an original image and a receiver sheet.
- Fig. 11: shows an original image and a receiver sheet.

### Detailed Description of the Invention

In this specification, the term "copier" is meant to refer to apparatus arranged for reading the image information on an original hard copy and for reproducing such image information on a receiver sheet. The term "printer" is meant to refer to apparatus arranged for receiving image information in other than hard copy form and for reproducing such image information on a receiver sheet. The term "original" is meant to refer to image information to be reproduced, whether such image information is in hard copy, electronic, or other form. The term "reproduction apparatus" is meant to refer to copiers and/or printers.

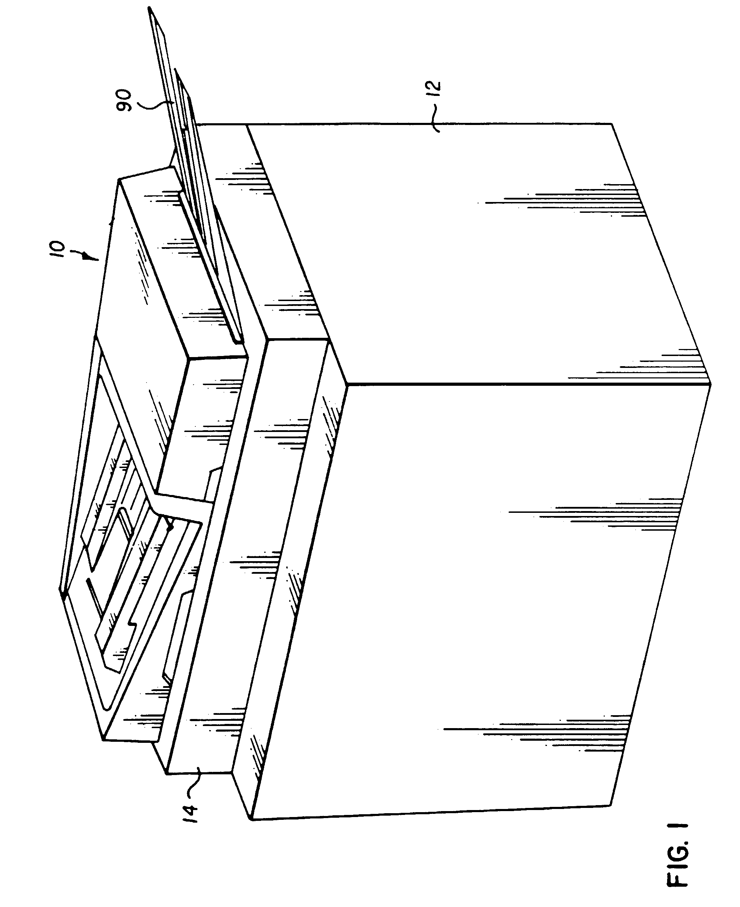

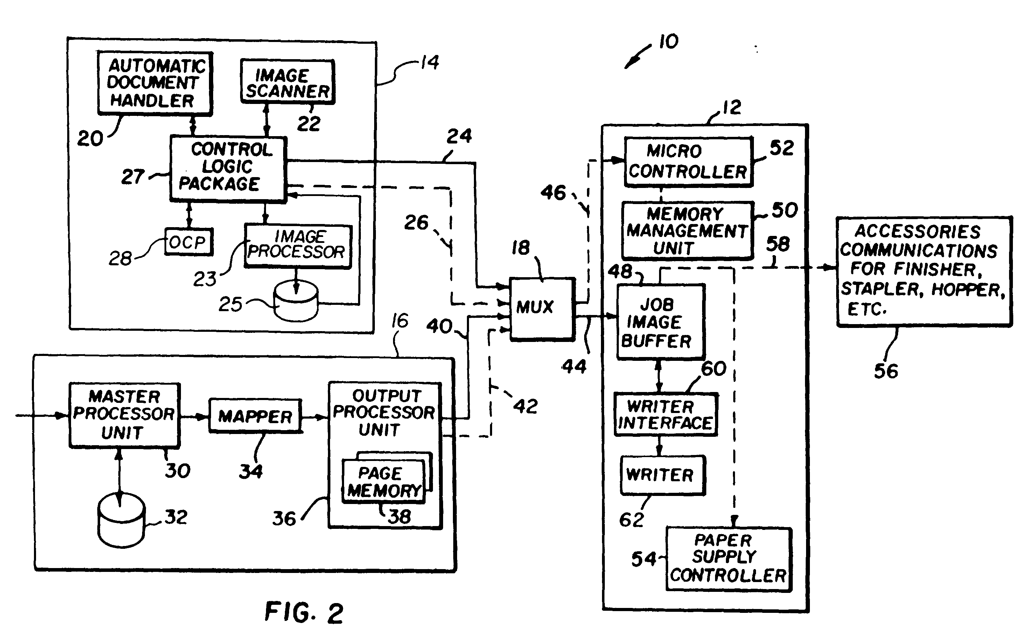

According to Fig. 1 and 2, reproduction apparatus 10 includes a marking engine 12, a scanner 14, a raster image processor 16, and a multiple input controller 18 for selecting the input to the marking engine.

An original document reader such as scanner 14 is arranged for producing a series of electrical signals representative of the image content of originals. Scanner 14 includes an automatic document handler 20 for stream feeding multiple hard copy original pages to be automatically read by an image scanner 22 such as a linear array of solid-state charge-coupled devices. Sensors in automatic document handler 20 determine the dimensions of the original pages. The solid state device scans the original pages, converting their images to a series of electrical signals. These signals are image processed by image processor 23 to, for example, reduce or enlarge the original image. After being image processed, the electronic signals are stored in page format in a buffer 25. Once a complete page is stored in buffer 25 it can be sent to job image buffer 48. Each page may be electronically rotated 90 degrees as it is read out of buffer 25. The image data is transmitted along an image data bus 24 to multiple input controller 18. Synchronization signals to identify separate scan lines and to provide page information and marking engine control is transmitted along a job control communications link 26.

Scanner 14 includes a control logic package 27 having an operator control panel 28 for the operator to input functions and to receive messages from the reproduction apparatus. Setup instructions are input to the scanner, while information for finishing and processing of jobs will be sent to marking engine 12. The logic package consists of control software, interface software, and logic hardware. Functions inputted by the operator at the control panel include a pamphlet mode, to be explained in detail below.

Raster image processor 16 includes a master processor unit 30 which receives high level commands, such as page description language, and data in character code form from a main frame computer, network link, data processing work station, removable memory media, FAX, or the like. The commands are translated into machine control language by the master processing unit. A job buffer 32 stores incoming jobs and program codes for use by the master processing unit.

After interpreting a job, master processing unit 30 parcels the job to a mapper 34 which converts the character code data to a pixel pattern map representative of image information. The mapper enlarges or reduces the image information as needed. For color prints, the mapper separates the information into four raster patterns; one for each color available at marking engine 12.

Once the pixel pattern map is rasterized, mapper 34 sends page information to an output processor unit 36. The output processor unit has page memory 38, which stores image planes for transmission to job image buffer 48. Each image plane can be rotated 90 degrees as it is read out of page memory 38.

The processed image data is transmitted along an image data bus 40 to multiple input controller 18. Synchronization signals to identify separate scan lines and to provide page information and marking engine control is transmitted along a job control communications link 42.

Marking engine 12 receives bit stream image data over a bus 44 and job control data over a communications link 46, both for storage in a multiple page buffer memory 48 under the control of a memory management unit 50. Memory devices may be classified as being either "totally accessible" wherein simultaneous requests for access to two different addresses can be honored, or "not totally accessible" wherein only those addresses in a particular subset can be accessed at the same time. In the embodiment of reproduction apparatus as disclosed herein, the file maintenance problem is not solvable if only one "not totally accessible" memory is used since in normal operation the scanner (or the raster image processor) and the writer will generally not be working out of the same subset. Accordingly, job image buffer should preferably consist of two or more "not totally accessible" memories or at least one "totally accessible" memory.

One function of multiple-page image buffer 48 is to store all the pages of a particular job so that plural sets of signatures may be produced without re-scanning the set of originals for each set produced. As such, automatic document handler 20 need not be capable of recirculating the originals.

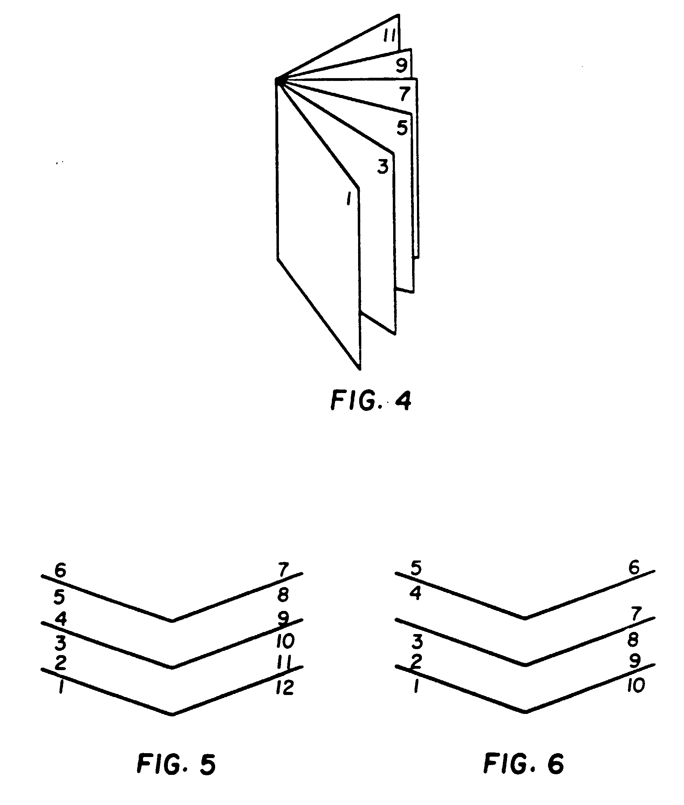

The images stored in the job image buffer are used by the writer in a different order than the order of the original image information. This process is controlled by microcontroller 52. For example, referring to Fig. 5, pages 1 and 12 would be retrieved from the job image buffer and used to create toner images side by side on the photoconductive web. The toned images created on the photoconductor are transferred to receiver sheets to form signatures after which the signatures are stacked and folded to form a pamphlet. The details of stacking and folding receiver sheets to form pamphlets are disclosed in US-A-5,108,081, and which is incorporated herein by reference. Of course, the original image information can optionally be reordered prior to storage in the job image buffer. For example, a multi-page ASCII file can be manipulated by software to reorder the pages prior to sending the ASCII file to a raster image processor.

Control means, including a micro controller 52 is arranged to perform arithmetic and logic operations and instruction decoding as well as controlling the time allocation of peripherals (such as a paper supply controller 54 and accessories 56) through a machine control communications link 58. Several output functions may be available for receiver sheets, including selection of output trays, stapling, sorting, folding, finishing, mailbox, envelope receiver, etc.

After appropriate processing, the data is inputted to a writer interface 60 and a writer 62 for forming images on the receiver sheets.

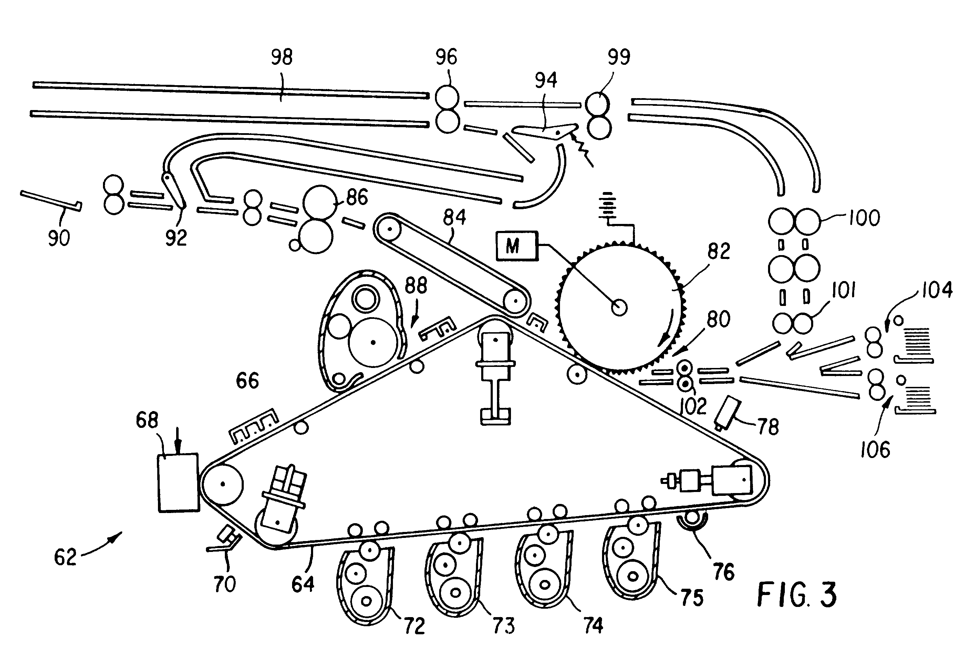

According to Fig. 3 a film core portion of writer 62 includes an image bearing member, for example, an endless electrophotoconductive web 64 entrained about a series of primary rollers and other supporting structure. Web 64 is driven through a series of electrophotographic stations generally well-known in the art. More specifically, a uniform charge is laid down on the web by a charging station 66. The uniformly charged web moves around one of the rollers, which is directly opposite an LED printhead 68 which LED printhead exposes web 64 in a manner well-known in the art. The web then moves into operative relation with an electrometer 70 which senses the level of a charge existing after exposure of the web by printhead 68, to help control the process.

The web then moves into operative relation with a series of toning or developing stations 72, 73, 74 and 75. Each image created by printhead 68 is toned by one of the toning stations. After being toned the web passes a magnetic scavenger 76 which removes excess iron particles picked up in the toning process. After the electrostatic image has been toned the web passes under a densitometer 78 which measures the density of the toner image also for use in controlling the process. The toner image then proceeds to a transfer station 80 where the image is transferred to a transfer surface of a receiver sheet carried by a transfer drum 82.

As thoroughly discussed in US-A-4,712,906, consecutive images in different colors are transferred in registry to a receiver sheet. The receiver sheet is wrapped on transfer drum 82 and recirculated on the surface of the drum into transfer relation with the consecutive images to create a multicolor image on the sheets. To improve efficiency, large sheets, for example, "ledger" size sheets are placed on the drum with the small dimension parallel to the axis of the drum and wrapped substantially around the transfer drum. Small sheets, for example, "letter" size sheets are placed with their long dimension parallel to the axis of the drum. Since the short dimension of letter size sheets is approximately half the long dimension of ledger size sheets, two letter size sheets are placed on the drum in approximately the same space as the single ledger size sheet.

When the apparatus is operating in a multi-image mode, for example, a multicolor mode, consecutive images or pairs of images are toned with different colored toners using the different toning stations 72-75. These consecutive images are transferred in registry to the receiver sheet as it repeatedly is brought into transfer relation with web 64 by drum 82. After the transfer operation is complete, the receiver sheet is allowed to follow the web, for example, by removing the vacuum holding it to drum 82 or by stripping the sheet with a skive, other conventional stripping mechanism, or both. The receiver sheet is separated from the web with the aid of an electrostatic sheet transport mechanism 84 and is transported to a fuser 86. The web is then cleaned by the application of a neutralizing corona and a neutralizing erase lamp and a magnetic brush cleaning mechanism all located at a cleaning station 88.

After the receiver sheet leaves fuser 86 it can go directly to an output tray 90 or be deflected by a deflector 92 into a duplex path according to the position of deflector 92, the position of which is controlled by the logic of the apparatus through means not shown. The duplex path moves the sheet by rollers and guides directing it first through a passive deflector 94 into turn-around rollers 96. Turn-around rollers 96 are independently driven to drive the receiver sheet into turn-around guide means 98, until the trailing edge thereof has been sensed by an appropriate sensor, not shown, to have passed passive deflector 94. Once the trailing edge has passed passive deflector 94, turn-around rollers 96 are reversed and the receiver sheet is driven by rollers 96 and other sets of drive rollers 99, 100, and 101 back to a position upstream of transfer station 80. The receiver sheet can pass through registration mechanisms for correcting for skew, cross-track misalignment and in-track misalignment and ultimately stop at timing rollers 102.

Transfer station 80 receives sheets from any of three sources. First, it can receive sheets of one particular size from a first supply 104, which first supply may include, for example, letter size sheets being fed with their short dimension parallel with the direction of feed. Second, it may receive sheets from a second supply 106, which, for example, may include 8.5" X 14.0" size sheets with their long dimension parallel to the direction of movement. Third, the transfer station may receive sheets from the duplex path which may include either size sheet and would already contain a fused image on its upper side. The receiver sheets from whatever source, stop against timing rollers 102. In response to a signal from the logic and control of the apparatus, not shown, timing rollers 102 accelerate to drive the receiver sheet into the nip between transfer drum 82 and the web as the first toner image to be transferred approaches the nip.

The duplex path is of a length that takes multiple sheets at one time depending on the length of the sheets. For example, four letter size sheets may be in the duplex path at one time or two ledger size sheets. If the printer is printing different images on different sheets, the logic and control of the apparatus must supply the necessary programming to the exposure and toning stations so that the sheets ultimately fed to output tray 90 are in the correct order considering the number of sheets that must be in the duplex path.

As an example of the functions of the elements described, it will be assumed that an operator desires to make eight collated sets of 8.5" X 14.0" signatures of an original document made up of, say, twelve 8.5" x 11.0" pages stacked in automatic document handler 20 such that the signatures can be bound and folded in the center so as to read like a book with the pages properly scaled and sequenced as illustrated in Fig. 4 and 5. At this point, it will be noted that pages can be arranged consecutively as shown in Fig. 5, or in chapters such that the first page of a new chapter begins on the right most page as viewed from the reading vantage as illustrated in Fig. 6. For purposes of this example, it will further be assumed that job image buffer 48 is fully capable of storing the information from at least the twelve original pages.

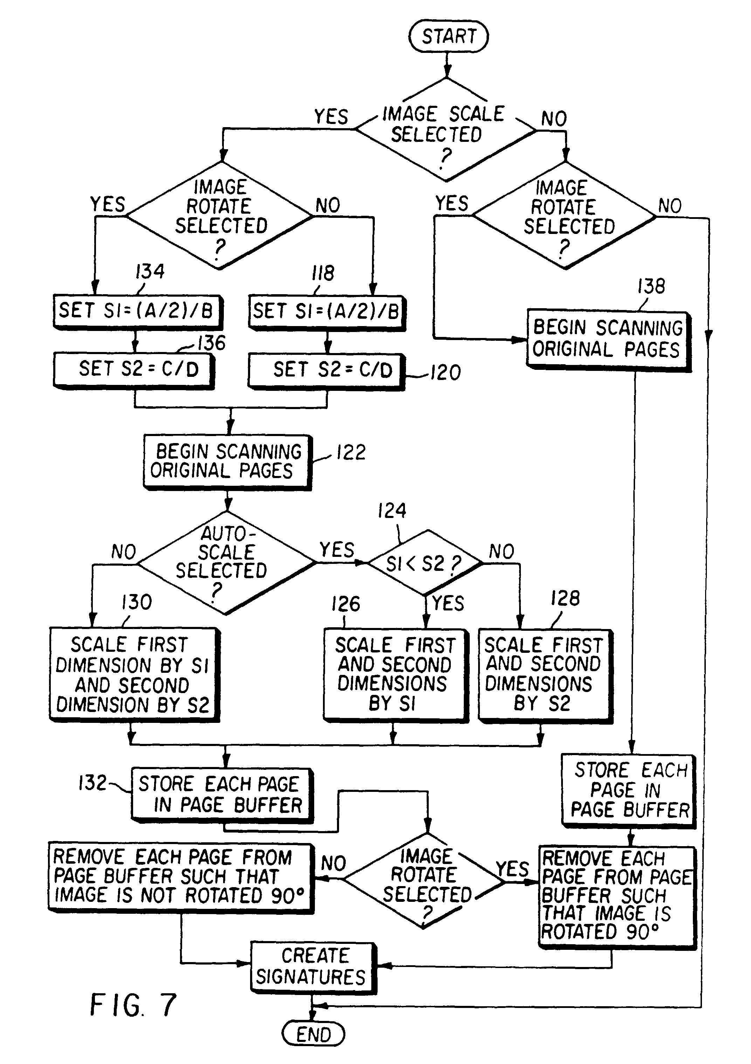

Referring to Fig. 7-8, the operator places original pages 110 in automatic document handler 20. Original pages 110 have, for example, an 8.5" first dimension B and 11.0" second dimension D. The operator selects a pamphlet mode using control panel 28. The operator can then choose to scale and or rotate original images. If the operator chooses to scale original images (s)he also chooses whether to use auto-scale or auto fit. With auto-scale the image information will be scaled by the same factor in both the first and second dimensions. With auto-fit the image information will be scaled by different scaling factors in the first and second dimensions. Finally, the operator selects a receiver sheet size using the operator control panel. The operator may select a receiver sheet 120 which has a 14.0" first dimension A and an 8.5" second dimension C.

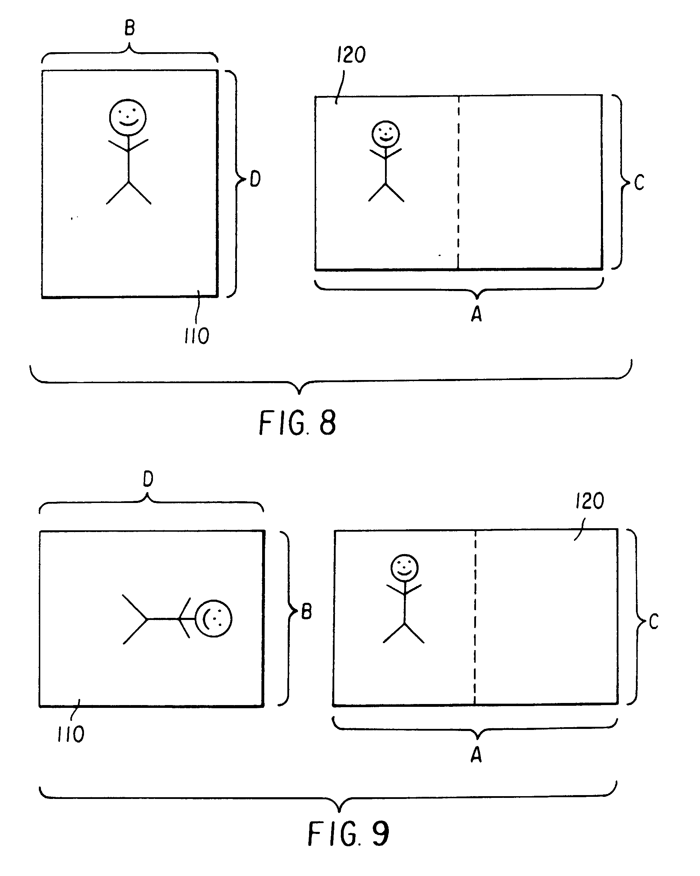

In Fig. 8, original page 110 is oriented in a portrait position while receiver sheet 120 is oriented in a landscape position. In this case an operator would probably select image scaling but not image rotation. This would also be true if original page 110 was oriented in a landscape position and receiver sheet 120 was oriented in a portrait position.

Actuation of a start button on the operator control panel causes control logic package 27 to start a subroutine represented in Fig. 7. A first scaling factor S1 is set equal to (A/2)/B at a step 118 and a second scaling factor S2 is set equal to C/D at a step 120. Dimensions B and D are obtained by sensors in the automatic document handler while dimensions A and C are obtained from the selected receiver sheet size. In Fig. 8, S1 equals .82 and S2 equals .77.

Automatic document handler 20 is activated to move a document into an exposure station of image scanner 22 at a step 122. As the scanning progresses, data (including image information and control signals) are received by image processor 23 where scaling of the image information is accomplished. If auto-scale has been selected a comparison is made at a step 124 to see if S1 < S2. If S1 is < S2 then scaling factor S1 is used to scale the image information in both the first B and second D dimensions at a step 126. If S1 is not < S2 then scaling factor S2 is used to scale the image information in both the first B and second D dimensions at a step 128. If auto-scale is not selected an auto-fit mode is entered at a step 130 where scaling factor S1 is used to scale image information in the first dimension B while scaling factor S2 is used to scale image information in the second dimension D.

Any scaling down of image information, or scaling up of image information in a cross-track dimension, is accomplished by an application specific integrated circuit (ASIC) in image processor 23. This ASIC embodies appropriate algorithms for scaling the image information. For example, if the image information is to be scaled down in an in-track dimension (e.g. B in Fig. 8) by 50%, the ASIC would eliminate every other scanned line of image information prior to storing the image information in image buffer 25. If the image information is to be scaled down in a cross-track dimension (e.g. D in Fig. 8) by 50%, the ASIC would eliminate every other pixel in each scanned line of image information prior to storing the image information in image buffer 25. To scale up the image information in a cross-track dimension by, for example, 200% every pixel in each scanned line would be doubled. To scale up the image information in an in-track dimension by, for example, 200%, a motor (not shown) used to move scanner 22 is slowed down such that scanner 22 moves at half its normal operating speed. This doubles the number of scanned lines for each original image.

After the image information is scaled at image processor 23 it is stored in buffer 25 at a step 132. Once a page is completely stored in buffer 25 it is transmitted to job image buffer for storage. Because image rotate has not been selected, each page is removed from buffer 25 such that it is not rotated 90 degrees. As subsequent original pages are scanned, the processes described above are repeated until all of the original pages have been scanned and the data therefrom stored in job image buffer 48.

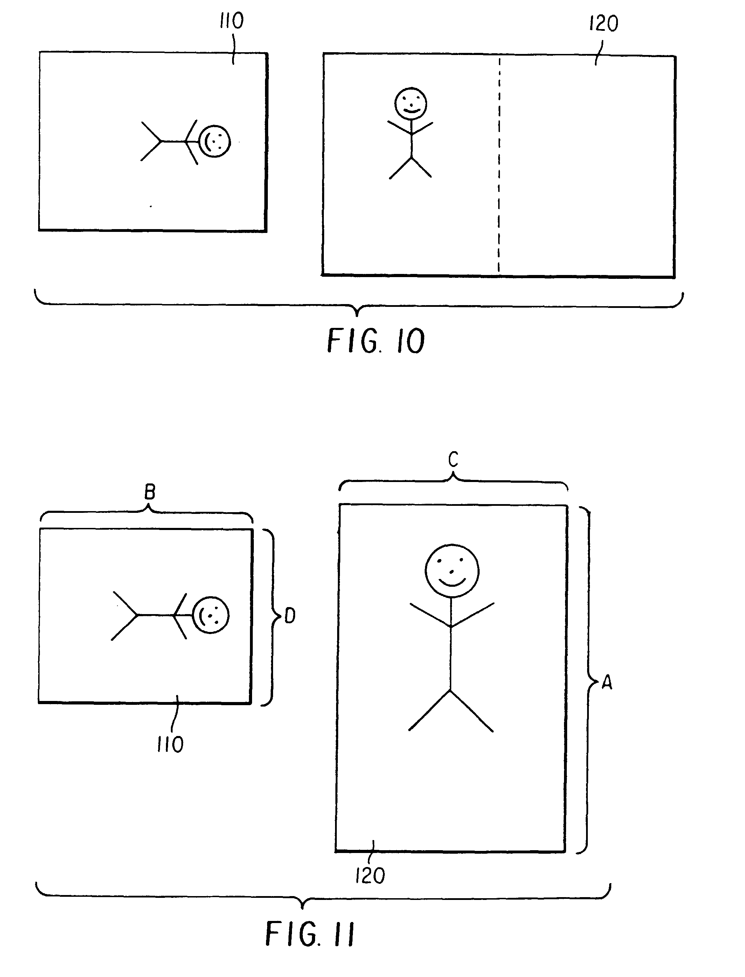

Referring to Fig. 7 and 9, here the original image 110 and receiver sheet 120 are the same dimensions as in Figure 8. However, both sheets are now oriented in a landscape position. In this case an operator would probably choose to both rotate and scale the images. The operator would also probably make this choice if both sheets were oriented in a portrait position. First scaling factor S1 is set equal to (A/2)/B at a step 134 while second scaling factor S2 is set equal to C/D at a step 136. The procedure then continues as described above except that here image rotate has been selected. Images are removed from buffer 25 such that the images are rotated 90 degrees. This can be accomplished by storing the electronic signals in one order and removing them in another order. For example, the electrical signals can be stored row by row and read out column by column. For further details on electronically rotating images 90 degrees, see US-A-5,111,192 which issued in the name of Kadakia on May 5, 1992 and which is incorporated herein by reference.

Referring to Fig. 7 and 10, an 8.5" X 11.0" original image 110 is to reproduced on an 11.0" X 17.0" receiver sheet 120 to create a signature. In this case an operator would probably choose to rotate, but not scale, the original images. The original images are scanned in at a step 138 with each page being stored in buffer 25. As above for Fig. 9, each image is read out of buffer 25 such that it is rotated 90 degrees.

Referring to Fig. 11, an 8.5" X 11.0" original page 110 in landscape orientation is to be reproduced on an 11.0" X 17.0" receiver sheet 120 in portrait orientation. In this case a signature is not being made: one image from page 110 is being reproduced on one side of sheet 120. The original image is rotated and scaled, in accordance with Fig. 7, to minimize distortion of the reproduced image. In this embodiment, however, scaling factor S1 is set to A/B rather than (A/2)/B. A great advantage of image rotation is that a small scanner, for example being only 11.0" in length to accommodate 11.0" X 17.0" originals, is used to scan in originals. This greatly reduces the size and cost of the scanner. In addition, a wide marking engine, for example having a width of 17.0", is used to create output prints. A wide marking engine assists in increasing the throughput rate of an image reproduction apparatus.

When image information is being provided by raster image processor 16, rather than by scanner 14, essentially the same process as described above is used. In this case the dimensions of the original image information are obtained from the page description language. An ASIC in the mapper scales the image information as needed. Each image can be rotated 90 degrees as it is read out of page memory 38 and sent to job image buffer 48 where the image is used to create signatures.

This invention is not limited to electrostatographic image reproduction apparatus: it can be used with, for example, ink jet image reproduction apparatus.

## Claims

1. Apparatus including means for creating electronic signals representative of an original image (110) information for creating signatures used to make pamphlets and means for obtaining a first and second dimension (A, C) of a receiver sheet (120), said apparatus is characterized by:
means (20) for automatically obtaining a first and second dimension (B, D) of the original image (110) information;
means for determining a first scaling factor by dividing the first dimension (A) of the receiver sheet (120) by two and dividing the result by the first dimension (B) of the original image (110) information;
means for determining a second scaling factor by dividing the second dimension (C) of the receiver sheet (120) by the second dimension (D) of the original image (110) information;
means for using one or both of said first and second scaling factors to scale said electronic signals,
⇒ such that said using means utilizes said first scaling factor to scale said original image information if said first scaling factor is less than said second scaling factor;
⇒ such that said using means utilizes said second scaling factor to scale said original image information if said second scaling factor is less than said first scaling factor; and
⇒ such that said using means utilizes either of said first or second scaling factors to scale said image information if said first and second scaling factors are equal; and
means for utilizing said scaled etectronic signals to create visible images on the receiver sheet (120) to form a signature.

2. Signature creating apparatus as defined in claim 1 characterized in that said using means includes:
means for utilizing said first scaling factor to scale said original image (110) information in a first direction; and
means for utilizing said second scaling factor to scale said original image (110) information in a second direction.

3. Signature creating apparatus as defined in claim 1 characterized in that said electronic signal creating means includes a document scanner (14).

4. Signature creating apparatus as defined in claim 1 characterized in that said electronic signal creating means includes a raster image processor (16).

5. Signature creating apparatus as defined in claim 1 characterized in that said utilizing means creates visible images which may be rotated 90 degrees from the orientation of the original image (110) information.

6. Signature creating apparatus as defined in claim 1 characterized in that said utilizing means includes an electrostatographic marking engine (12).

## Patentansprüche

1. Vorrichtung mit einem Mittel zum Erzeugen von eine Originalbild (110)-Information kennzeichnenden elektronischen Signalen zum Erzeugen von Bogensignaturen zur Verwendung bei der Herstellung von Broschüren, und einem Mittel zum Erzielen einer ersten und zweiten Abmessung (A,C) eines Empfangsblatts (120), gekennzeichnet durch
- ein Mittel (20) zum automatischen Erzielen einer ersten und zweiten Abmessung (B,D) der Originalbild (110)-Information;
- ein Mittel zum Bestimmen eines ersten Skalierungsfaktors durch Teilen der ersten Abmessung (A) des Empfangsblatts (120) durch zwei und Teilen des Resultats durch die erste Abmessung (B) der Originalbild (110)-Information;
- ein Mittel zum Bestimmen eines zweiten Skalierungsfaktors durch Teilen der zweiten Abmessung (C) des Empfangsblatts (120) durch die zweite Abmessung (D) der Originalbild (110)-Information;
- ein Mittel zur Verwendung eines oder beider der ersten und zweiten Skalierungsfaktoren, um die elektronischen Signale zu skalieren, so daß
- das Mittel zur Verwendung den ersten Skalierungsfaktor zum Skalieren der elektronischen Signale benutzt, wenn der Wert des ersten Skalierungsfaktors unter dem des zweiten liegt;
- das Mittel zur Verwendung den zweiten Skalierungsfaktor zum Skalieren der Originalbild-Information benutzt, wenn der Wert des zweiten Skalierungsfaktors unter dem des ersten liegt;
- das Mittel zur Verwendung entweder den ersten oder den zweiten Skalierungsfaktor zum Skalieren der Originalbild-lnformation benutzt, wenn der erste und zweite Skalierungsfaktor identisch ist; und
- ein Mittel zum Benutzen der skalierten elektronischen Signale bei der Erzeugung sichtbarer Bilder auf dem Empfangsblatt (120), um eine Bogensignatur zu erzeugen.

2. Vorrichtung nach Anspruch 1, dadurch gekennzeichnet, daß das Mittel zur Verwendung folgende Komponenten aufweist:
- ein Mittel zum Benutzen des ersten Skalierungsfaktors, um die Originalbild (110)-lnformation in einer ersten Richtung zu skalieren; und
- ein Mittel zum Benutzen des zweiten Skalierungsfaktors, um die Originalbild (110)-lnformation in einer zweiten Richtung zu skalieren.

3. Vorrichtung nach Anspruch 1, dadurch gekennzeichnet, daß das Mittel zum Erzeugen der elektronischen Signale ein Vorlagen-Scanner (14) ist.

4. Vorrichtung nach Anspruch 1, dadurch gekennzeichnet, daß das Mittel zum Erzeugen der elektronischen Signale ein Rasterbild-Prozessor (16) ist.

5. Vorrichtung nach Anspruch 1, dadurch gekennzeichnet, daß das Mittel zum Benutzen sichtbare Bilder erzeugt, die relativ zur Ausrichtung der Originalbild (110)-Information um 90° drehbar sind.

6. Vorrichtung nach Anspruch 1, dadurch gekennzeichnet, daß das Mittel zum Benutzen eine Druckeinrichtung (12) ist.

## Revendications

1. Appareil comprenant un moyen destiné à élaborer des signaux électroniques représentatifs des informations d'une image originale (110) afin de fabriquer des cahiers utilisés pour réaliser des brochures, et un moyen destiné à obtenir une première et seconde dimension (A, C) d'une feuille réceptrice (120), ledit appareil étant caractérisé par :
un moyen (20) destiné à obtenir automatiquement une première et une seconde dimensions (B, D) des informations de l'image originale (110),
un moyen destiné à déterminer un premier facteur d'échelle, en divisant la première dimension (A) de la feuille réceptrice (120) par deux et en divisant le résultat par la première dimension (B) des informations de l'image originale (110),
un moyen destiné à déterminer un second facteur d'échelle, en divisant la seconde dimension (C) de la feuille réceptrice (120) par la seconde dimension (D) des informations de l'image originale (110),
un moyen destiné à utiliser l'un ou bien les deux desdits premier et second facteurs d'échelle afin de mettre à l'échelle lesdits signaux électroniques,
⇒ de façon que ledit moyen d'utilisation utilise ledit premier facteur d'échelle pour mettre à l'échelle lesdites informations de l'image originale si ledit premier facteur d'échelle est inférieur audit second facteur d'échelle, et
⇒ de façon que ledit moyen d'utilisation utilise ledit second facteur d'échelle pour mettre à l'échelle lesdites informations de l'image originale si ledit second facteur d'échelle est inférieur audit premier facteur d'échelle,
⇒ de façon que ledit moyen d'utilisation utilise l'un ou l'autre dudit premier ou dudit second facteur d'échelle pour mettre à l'échelle lesdites informations d'image si lesdits premier et second facteurs d'échelle sont égaux, et
un moyen destiné à utiliser ledit signaux électronique mis à l'échelle afin de créer des images visibles sur la feuille réceptrice (120) de manière à former un cahier.

2. Appareil de fabrication de cahiers selon la revendication 1, caractérisé en ce que ledit moyen d'utilisation comprend :
un moyen destiné à utiliser ledit premier facteur d'échelle pour mettre à l'échelle lesdites informations de l'image originale (110) dans une première direction, et
un moyen destiné à utiliser ledit second facteur d'échelle pour mettre à l'échelle lesdites informations de l'image originale (110) dans une seconde direction.

3. Appareil de fabrication de cahiers selon la revendication 1, caractérisé en ce que ledit moyen d'élaboration de signaux électroniques comprend un dispositif de balayage de document (14).

4. Appareil de fabrication de cahiers selon la revendication 1, caractérisé en ce que ledit moyen d'élaboration de signaux électroniques comprend un dispositif de traitement d'images échantillonnées (16).

5. Appareil de fabrication de cahiers selon la revendication 1, caractérisé en ce que ledit moyen d'utilisation crée des images visibles que l'on peut faire tourner de 90 degrés par rapport à l'orientation des informations de l'image originale (110).

6. Appareil de fabrication de cahiers selon la revendication 1, caractérisé en ce que ledit moyen d'utilisation comprend une machine de marquage électrostatographique (12).
